# EUROPÄISCHE PATENTSCHRIFT

(11) **EP 1 542 344 B1**
(45) Veröffentlichungstag und Bekanntmachung des Hinweises auf die Patenterteilung: **06.06.2007**
(21) Anmeldenummer: 04023871.9
(22) Anmeldetag: 07.10.2004
(51) Int. Cl.: H02K 29/08

(54) **Elektrische Maschine**
Electric machine
Machine électrique

(30) Priorität: 09.12.2003 DE 10357346
(43) Veröffentlichungstag der Anmeldung: 15.06.2005
(73) Patentinhaber: ROBERT BOSCH GMBH, 70442 Stuttgart (DE)
(72) Erfinder: Meyer, Marcus, 76359 Pfaffenrot (DE); Wehrle, Andreas, 77652 Offenburg (DE); Geissler, Jochen, 77855 Achern (DE)

(56) Entgegenhaltungen:
- EP-A- 0 936 723
- WO-A-01/28076
- FR-A- 2 717 324
- PATENT ABSTRACTS OF JAPAN Bd. 015, Nr. 464 (E-1137), 25. November 1991 (1991-11-25) -& JP 03 198647 A (SHINANO KENSHI KK), 29. August 1991 (1991-08-29)
- PATENT ABSTRACTS OF JAPAN Bd. 008, Nr. 091 (E-241), 26. April 1984 (1984-04-26) -& JP 59 011762 A (CANON KK; others: 01), 21. Januar 1984 (1984-01-21)

## Beschreibung

### Stand der Technik

Die Erfindung geht aus von einer elektrischen Maschine nach dem Oberbegriff des Patentanspruchs 1. Eine derartige elektrische Maschine umfasst einen eine Wicklung aufweisenden Stator. Ein ferromagnetisch oder permanentmagnetisch erregter Rotor erzeugt mit dem Stator den Abtrieb der elektrischen Maschine. Eine einen Sensor aufweisende Einrichtung erfasst das Magnetfeld des Rotors, wobei zur elektrischen Generierung von Motorströmen beispielsweise in bürstenlosen Motoren der Drehwinkel der Rotorlage mittels Magnetfeld-Sensoren als Ist-Position erfasst wird. Eine Rechnereinheit ermittelt daraus die Phasenlage der zu generierenden Motorströme in den entsprechenden Wickelsträngen.

Als Basis eines solchen Systems dienen mindestens ein, zwei, meist drei oder mehr konventionelle Hall-Sensoren welche mittels eines zwei- oder mehrpoligen Magneten angeregt werden. Aus den gewonnenen Winkelinformationen, kann der Schaltzeitpunkt für die Transistoren bzw. Spulenstränge ermittelt werden. Eine Rechnereinheit oder eine einfache Steuereinheit bildet im Anschluss die Ansteuersignale für die Endstufe, welche die Motorsignale bereitstellt.

Aufgrund von Lagetoleranzen der Sensoren, Magnete oder Leiterplatten sowie durch Ungenauigkeiten in den elektronischen Bauteilen kann es zu Schaltpunktverschiebungen kommen. Diese führen in der Regel zu einer Verminderung des Motorwirkungsgrades bzw. zu erhöhter Laufunruhe. Einige dieser Driften können durch die Steuereinheit abgefangen und kompensiert werden. Die hierzu nötige Rechenleistung muss bei der Systemauslegung berücksichtigt werden und führt zu erheblichen Mehrkosten.

Da die Sensoren auch gegenüber Störfeldern reagieren, ist es wichtig, das Nutzfeld gegenüber dem Störfeld groß zu halten. Bisherige Lösungen verwenden hierzu oft einen zusätzlichen Magneten, der auf der Motorwelle aufgebracht wird. Die Sensoren werden dann sehr nah an diesem Magneten angeordnet, damit der maximale magnetische Fluss detektiert werden kann.

Mit der EP 0 93 6 723 A ist ein bürstenloser Gleichstrommotor bekannt geworden, bei dem das Magnetfeld des Rotors mittels magnetisch leitenden Einlegeteilen detektiert wird. Hierzu sind die Einlegeteile zwischen dem stirnseitigen Ende des Rotors und den auf einer Leiterplatte fixierten Hall-Sensoren angeordnet.

Die WO 01/28076 A zeigt einen bürstenlosen DC-Motor, bei dem das Magnetfeld des Rotors mittels Hall-Sensoren detektiert wird. Hierzu wird die Halteplatte der Hall-Sensoren von Magnetleitern durchdrungen, die die Hall-Sensoren an das Magnetfeld ankoppeln.

Die FR-A-2717324 zeigt eine Vorrichtung zur Drehwinkelerfassung, bei der das Magnetfeld eines rotierenden Permanentmagneten mittels Magnetleiter zu einem Magnetsensor geleitet wird.

In der JP 03198647 A und in der JP 59011762 A sind ebenfalls bürstenlose DC-Motoren beschrieben, bei denen der magnetische Fluss des Rotors mittels Magnetleitmitteln zu einem axial beabstandet angeordneten Magnetsensor geleitet werden.

### Vorteile der Erfindung

Die erfindungsgemäße elektrische Maschine mit den Merkmalen des Patentanspruchs 1 hat den Vorteil, dass eine Korrelation des Sensormagnetsignals (Flussverlauf) zum Rotormagnetverlauf entfällt. D.h. durch eine exakte Positionierung der Magnetleiter ist die Kompensation von Sensorsignalvorlauf oder -nachlauf nicht mehr notwendig. Darüber hinaus tritt eine Kosten- und Platzersparnis ein, weil ein Hilfsmagnet zur Sensorstimulation entfällt. Außerdem führt dies zu einer Bauraumersparnis, da der Motor kürzer gebaut werden kann. Die Kombination von Magnetleitertechnik und Rotormagnet ermöglicht mehr Freiheiten in der Konstruktion. Zusätzlich erfolgt eine höhere Störfestigkeit, da die Sensierungsebene des Sensors aus der Ebene von gerichteten Störfeldern gedreht werden kann. Die Notwendigkeit zur Kompensation des Sensorsignals ist stark reduziert oder gar nicht notwendig

Hierzu ist eine elektrische Maschine vorgesehen mit einem eine Wicklung aufweisenden Stator, mit einem ferromagnetisch oder permanentmagnetisch erregten Rotor zur Erzeugung des Abtriebs der elektrischen Maschine mit dem Stator und mit einer mindestens einen Sensor aufweisenden Einrichtung, die das Magnetfeld des Rotors erfasst, wobei die Einrichtung mindestens einen zumindest teilweise weichmagnetischen Leiter umfasst, der das Magnetfeld des Rotors zum mindestens einen Sensor leitet.

Ist der Leiter ein vom Stator separates Bauteil, so ergeben sich größere Freiheiten bezüglich der geometrischen Gestaltung. Außerdem wird durch das gegenüber einem Sensormagneten wesentlich größere Magnetfeld ein größeres Signal übertragen bzw. die Querschnittsfläche des Leiters kann kleiner gewählt werden.

In seinem einfachsten Aufbau ist der Leiter ein Stab. Dieser kann gerade oder gebogen sein.

Vorzugsweise ist das sensorseitige Ende des mindestens einen Leiters am mindestens einen Sensor befestigt, da dadurch das Signal besser übertragen wird. Ist der Sensor außerhalb des Stators angeordnet, so wird sein Signal nicht so stark vom Feld des Stators beeinflusst. Ist der Sensor auf einer Halterung montiert, die eine vom Stator separate Baugruppe bildet, so kann eine Prüfung vor der Montage erfolgen.

Durch die Verwendung eines Leiters, der flach ausgebildet sein kann, kann das rotorseitige Ende des Leiters im Luftspalt zwischen dem Rotor und dem Stator bzw. in den Zahnlücken der Statorzähne angeordnet werden, wobei der Luftspalt gering bleiben kann.

Wird eine derartige elektrische Maschine für eine Antriebseinheit, insbesondere in einem Kraftfahrzeug, wie ein Fensterheber, Schiebdachantrieb, Triebstrangsteller, insbesondere Kupplungssteller oder dergleichen verwendet, so führt auch dies bei der Antriebseinheit zu einer Bauraumersparnis und einer höheren Störfestigkeit.

Weitere Vorteile und vorteilhafte Weiterbildungen ergeben sich aus den Unteransprüchen und der Beschreibung.

### Zeichnung

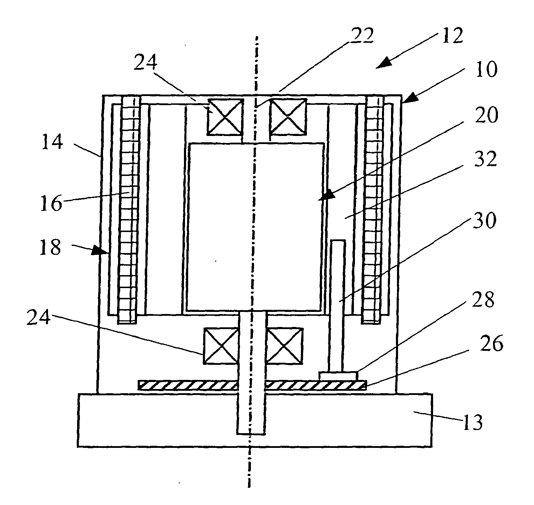

Ein Ausführungsbeispiel ist in der Zeichnung dargestellt und in der nachfolgenden Beschreibung näher erläutert. Die einzige Figur zeigt eine elektrische Maschine.

### Beschreibung des Ausführungsbeispiels

In der Figur ist eine elektrische Maschine 10 gezeigt, bei der es sich vorzugsweise um einen elektronisch kommutierten bzw. bürstenlosen Gleichstrom-Motor handelt. Die elektrische Maschine 10 ist Teil einer Antriebseinheit 12, die bevorzugt Verwendung in einem Kraftfahrzeug findet. Bei der Antriebseinheit 12 kann es sich um einen Fensterheber, einen Schiebdachantrieb, einen Triebstrangsteller, insbesondere Kupplungssteller oder dergleichen handeln. Symbolisch ist an der elektrischen Maschine 10 ein Getriebe 13 dargestellt.

In einem Gehäuse 14 enthält die elektrische Maschine 10 einen eine Wicklung 16 aufweisenden Stator 18 und einen ferromagnetisch oder permanentmagnetisch erregten Rotor 20 zur Erzeugung des Abtriebs, wie beispielsweise des Drehmoments, mit dem Stator 18. Die Welle 22 des Rotors 20 ist in mindestens zwei Lagern 24 gelagert.

Die elektrische Maschine 10 umfasst eine Einrichtung 26 zur Erfassung des Magnetfelds, die mindestens einen Sensor 28 aufweist. Die Einrichtung 26 ist vorzugsweise im Gehäuse 14 der elektrischen Maschine 10 angeordnet. Die Einrichtung 26 ist beispielsweise eine Leiterplatte, auf der der Sensor 28 und weitere Bauteile angeordnet sind. Soll nur die Drehzahl erfasst werden, genügt ein Sensor 28. Soll auch die Drehrichtung erfasst werden, so werden zwei Sensoren 28 verwendet. Der Sensor 28 ist außerhalb des Stators 18 angeordnet, so dass er nicht so sehr vom Feld des Stators 18 beeinflusst wird. Der Sensor 28 ist hierzu auf einer Halterung montiert, die eine vom Stator 18 separate Baugruppe bildet, wodurch eine getrennte Prüfung vor der Montage möglich ist.

Weiterhin umfasst die Einrichtung 26 mindestens einen zumindest teilweise weichmagnetischen Leiter 30, der das Magnetfeld des Rotors 20 zum Sensor 28 leitet. Teilweise kann das Material des Leiters 30 hartmagnetisch sein. Idealerweise ist der Leiter 30 aber aus einem möglichst weichmagnetischen Material. In der Regel wird ein als weichmagnetisch bezeichnetes Material verwendet, wie zum Beispiel Eisen-Kobalt-, Eisen-Silizium- oder Eisen-Nickel-Legierungen aber auch weichmagnetische Ferrite wie zum Beispiel Mangan-Zink-Ferrite, Nickel-Zink-Ferrite und so weiter.

Vorzugsweise ist der Leiter 30 ein Stab. Das sensorseitige Ende des Leiters 30 ist am Sensor 28 angeordnet. Das rotorseitige Ende des Leiters 30 ist in einer Zahnlücke 32 der Statorzähne angeordnet. Mit dem Bezugszeichen 32 ist auch der Luftspalt zwischen dem Rotor 20 und dem Stator 18 gekennzeichnet. Der Luftspalt ist dabei der kürzeste Abstand zwischen dem Rotor 20 und dem Stator 18. Je nach seiner Größe ist das rotorseitige Ende des Leiters 30 nur in der Zahnlücke 32 oder teilweise in der Zahnlücke 32 und teilweise in dem Luftspalt angeordnet.

Der Leiter 30 ist ebenfalls ein vom Stator 30 separates Bauteil. Vorzugsweise ist er an der Einrichtung 26 befestigt.

Wichtig ist, dass der Leiter 30 das Magnetfeld des Rotors 20, der auch als Nutzrotor bezeichnet werden kann, unter Verzicht eines zusätzlichen Magnetrads, das als Messrotor bezeichnet werden kann, misst.

Da der Bauraum in der Nähe des Stators recht begrenzt ist, wird das Magnetfeld mittels des weichmagnetischen, hoch permeablen Leiters 30 zum Sensor 28 geleitet. In der Regel kann dies auf die Flusszuführung begrenzt werden. In besonderen Fällen kann aber auch die zusätzliche Flussrückführung sinnvoll oder notwendig sein. Im vorgestellten Fall besteht der Vorteil darin, dass der Sensor 28 auf einer bereits vorhandenen, senkrecht zur Motorachse angeordneten Halterung in Form einer Platine montiert werden kann. Da die Sensierungsrichtung des Sensors 28 parallel zur Motorachse liegt, muss der radiale Magnetfluss des Rotors in einen axialen Fluss "umgeleitet" werden. Aufgrund des größeren Flusses können so gegenüber der Sensormagnetlösung größere Distanzen mit dem Leiter 30 realisiert werden.

## Patentansprüche

1. Elektrische Maschine (10) mit einem eine Wicklung (16) aufweisenden Stator (18), mit einem ferromagnetisch oder permanentmagnetisch erregten Rotor (20) zur Erzeugung des Abtriebs der elektrischen Maschine (10) mit dem Stator (18) und mit einer mindestens einen, ausserhalb des Stators angeordneten Sensor (28) aufweisenden Einrichtung (26), die das Magnetfeld des Rotors (20) erfasst, wobei die Einrichtung (26) mindestens einen zumindest teilweise weichmagnetischen Leiter (30) umfasst, der das Magnetfeld des Rotors (20) zum mindestens einen Sensor (28) leitet, **dadurch gekennzeichnet, dass** das rotorseitige Ende des mindestens einen Leiters (30) in einer Zahnlücke (32) des Stators (18) axial im Bereich des Rotors (20) angeordnet ist.

2. Elektrische Maschine (10) nach Anspruch 1, **dadurch gekennzeichnet, dass** der mindestens eine Leiter (30) ein vom Stator (18) separates Bauteil ist.

3. Elektrische Maschine (10) nach einem der vorhergehenden Ansprüche, **dadurch gekennzeichnet, dass** der mindestens eine Leiter (30) ein Stab ist.

4. Elektrische Maschine (10) nach einem der vorhergehenden Ansprüche, **dadurch gekennzeichnet, dass** das sensorseitige Ende des mindestens einen Leiters (30) am mindestens einen Sensor (28) angeordnet ist.

5. Elektrische Maschine (10) nach einem der vorhergehenden Ansprüche, **dadurch gekennzeichnet, dass** der mindestens eine Sensor (28) auf einer Halterung montiert ist, die eine vom Stator (28) separate Baugruppe bildet.

6. Elektrische Maschine (10) nach einem der vorhergehenden Ansprüche, **dadurch gekennzeichnet, dass** das rotorseitige Ende des mindestens einen Leiters (26) teilweise im Luftspalt (32) zwischen dem Rotor (20) und dem Stator (18) angeordnet ist.

7. Antriebseinheit (12), insbesondere für ein Kraftfahrzeug, wie ein Fensterheber, Schiebdachantrieb, Triebstrangsteller, insbesondere Kupplungssteller oder dergleichen mit einer elektrischen Maschine (10) nach einem der vorhergehenden Ansprüche.

## Claims

1. Electrical machine (10) having a stator (18) which has a winding (16), having a ferromagnetically or permanent-magnetically excited rotor (20) for production of the output drive from the electrical machine (10) with the stator (18), and having a device (26) which has at least one sensor (28) arranged outside the stator and detects the magnetic field of the rotor (20), with the device (26) having at least one at least partially soft-magnetic conductor (30), which carries the magnetic field of the rotor (20) to the at least one sensor (28), **characterized in that** the rotor end of the at least one conductor (30) is arranged axially in the area of the rotor (20), in a tooth gap (32) on the stator (18).

2. Electrical machine (10) according to Claim 1, **characterized in that** the at least one conductor (30) is a component separate from the stator (18).

3. Electrical machine (10) according to one of the preceding claims, **characterized in that** the at least one conductor (30) is a bar.

4. Electrical machine (10) according to one of the preceding claims, **characterized in that** the sensor end of the at least one conductor (30) is arranged adjacent to the at least one sensor (28).

5. Electrical machine (10) according to one of the preceding claims, **characterized in that** the at least one sensor (28) is mounted on a holder which forms an assembly separate from the stator (28).

6. Electrical machine (10) according to one of the preceding claims, **characterized in that** the rotor end of the at least one conductor (26) is partially arranged in the air gap (32) between the rotor (20) and the stator (18).

7. Drive unit (12) in particular for a motor vehicle, such as a window winder, sliding-roof drive, propulsion-train controller, in particular a clutch controller or the like, having an electrical machine (10) according to one of the preceding claims.

## Revendications

1. Machine électrique (10) comportant un stator (18) présentant un enroulement (16), comportant un rotor (20) à excitation ferromagnétique ou par aimant permanent pour produire l'entraînement de la machine électrique (10) en coopération avec le stator (18) et comportant un dispositif (26) présentant au moins un capteur (28) à l'extérieur du stator, lequel dispositif (26) capte le champ magnétique du rotor (20) et comprend au moins un conducteur (30) au moins partiellement magnétiquement doux qui conduit le champ magnétique du rotor (20) vers le capteur (28),
**caractérisée en ce que**
l'extrémité côté rotor du conducteur (30) se situe axialement à proximité du rotor (20) dans un entredent (32) du stator (18).

2. Machine électrique (10) selon la revendication 1,
**caractérisée en ce que**
le conducteur (30) est un composant séparé du stator (18).

3. Machine électrique (10) selon l'une quelconque des revendications précédentes,
**caractérisée en ce que**
le conducteur (30) est une barrette.

4. Machine électrique (10) selon l'une quelconque des revendications précédentes,
**caractérisée en ce que**
l'extrémité côté capteur du conducteur (30) se situe au niveau du capteur (28).

5. Machine électrique (10) selon l'une quelconque des revendications précédentes,
**caractérisée en ce que**
le capteur (28) est monté sur un support qui forme un ensemble séparé du stator (18).

6. Machine électrique (10) selon l'une quelconque des revendications précédentes,
**caractérisée en ce que**
l'extrémité côté rotor du conducteur (30) est située en partie dans l'entrefer (32) entre le rotor (20) et le stator (18).

7. Unité d'entraînement (12), notamment destinée à un véhicule automobile, telle qu'un lève-vitre, une commande de toit ouvrant, un actionneur de transmission, notamment un actionneur d'embrayage ou similaire, comportant une machine électrique (10) selon l'une quelconque des revendications précédentes.
